# FASCICULE DE BREVET EUROPEEN

(11) **EP 3 695 589 B1**
(45) Date de publication et mention de la délivrance du brevet: **23.03.2022**
(21) Numéro de dépôt: 18800698.5
(22) Date de dépôt: 10.10.2018
(51) Int. Cl.: H04M 1/04, F16M 11/04, F16M 11/22

(54) **SUPPORT DE TABLETTE MULTIMEDIA**
TRÄGER FÜR MULTIMEDIA-TABLET
SUPPORT FOR MULTIMEDIA TABLET

(30) Priorité: 11.10.2017 FR 1759518
(43) Date de publication de la demande: 19.08.2020
(73) Titulaire: Société BIC, 92110 Clichy (FR)
(72) Inventeur: ROUDAUT, Etienne, 92250 La Garenne Colombes (FR)
(74) Mandataire: Cabinet Beau de Loménie
(86) Numéro de dépôt international: PCT/FR2018/052517
(87) Numéro de publication internationale: WO 2019/073176

(56) Documents cités:
- WO-A1-2016/177965
- FR-A1- 2 964 070
- US-A1- 2012 273 637
- US-A1- 2014 291 465
- US-A1- 2016 167 586

## Description

### DOMAINE DE L'INVENTION

Le présent exposé concerne un support pour tablette multimédia, notamment un support configuré pour supporter la tablette multimédia en position d'assistance à l'utilisateur pour des applications de réalité augmentée.

### ARRIÈRE-PLAN TECHNOLOGIQUE

Il est connu de l'état de la technique des supports de tablette multimédia permettant de placer l'écran de la tablette multimédia dans une position d'utilisation confortable pour l'utilisateur, par exemple pour la visualisation d'un document affiché à l'écran de la tablette. Toutefois, ces supports sont généralement spécifiques à un type de tablette multimédia particulier (d'un modèle ou d'une taille spécifique) et ne sont pas adaptés pour utiliser la tablette multimédia dans le cadre d'applications de réalité augmentée. Il existe donc un besoin en ce sens.

WO2016/177965 divulgue un support de tablette multimédia selon le préambule de la revendication 1. US2012/273637 et US 2014/291465 divulguent d'autres supports de tablette.

### PRÉSENTATION DE L'INVENTION

Un mode de réalisation concerne un support de tablette multimédia, la tablette comprenant une face avant présentant un écran et un organe optique, et une face arrière opposée à la face avant, le support comprenant une portion d'appui configurée pour coopérer avec la face arrière de la tablette de façon à ce que l'écran soit visible, la portion d'appui s'étendant selon une première direction et selon une deuxième direction transversale à la première direction, la portion d'appui comprenant : une embase configurée pour être posée sur une surface de pose, un élément réflecteur optique configuré pour être disposé en regard de l'organe optique, et une portion de support configurée pour supporter la tablette, l'élément réflecteur optique et la portion de support étant portés par la portion d'appui de sorte que, considéré selon la première direction, la portion de support est disposée entre l'embase et l'élément réflecteur optique, la portion de support étant déplaçable selon la première direction, tandis que l'élément réflecteur optique étant déplaçable selon la deuxième direction.

Par la suite, et sauf indication contraire, par « support » on entend « support de tablette multimédia» et par « élément réflecteur » on entend « élément réflecteur optique ».

Au sens du présent exposé, par « tablette multimédia» on entend une tablette multimédia, un ordiphone (ou *smartphone* en anglais), un ordinateur portable comprenant un écran, de préférence tactile, équipé d'un organe optique et dont le clavier est escamotable ou amovible, ou tout autre dispositif électronique comprenant un écran et un organe optique intégrés. Une tablette multimédia est parfois désignée par tablette tactile, tablette électronique, ardoise électronique, tablette numérique, ou tout simplement tablette. Un ordiphone est parfois désigné par téléphone multifonction ou téléphone intelligent. Au sens du présent exposé l'IPad^{®} ou bien l'Iphone^{®}, de la marque Apple^{®}, forment des exemples de tablettes multimédias. Par la suite, et sauf indication contraire, par « tablette » on entend « tablette multimédia». Par exemple, l'organe optique est une caméra.

La réalité augmentée est une technologie consistant à superposer éventuellement en temps réel des informations complémentaires à des informations issues du monde réel.

La présente invention s'inscrit dans des applications de réalité augmentée relative à l'image, dans laquelle une image virtuelle est superposée à une image issue du monde réel, pour leur affichage sur un écran. Notamment, le support selon la présente invention est particulièrement bien adapté pour des applications d'assistance au dessin/écriture par réalité augmentée. En effet, l'élément réflecteur est configuré pour renvoyer vers l'organe optique de la tablette une image issue du monde réel, à laquelle se superpose une image virtuelle, correspondant à un dessin, une écriture, etc., sur l'écran de la tablette. L'utilisateur est ainsi assisté pour réaliser un dessin, écriture, etc. dans le monde réel

L'embase est la partie de la portion d'appui qui est disposée, directement ou indirectement sur une surface de pose. L'embase peut être configurée pour supporter à elle toute seule le support. Selon une variante, une partie additionnelle, par exemple un pied, permet de maintenir le support en position sur la surface de pose, avec l'embase. Par exemple, l'embase présente une droite de contact linéaire ou deux points de contact définissant un plan de pose avec un point de contact du pied. Le plan de pose est le plan du support configuré pour être posé sur la surface de pose. On comprend que la surface de pose est la zone sur laquelle l'utilisateur souhaite disposer le support. Ainsi, la surface de pose peut être formée par une surface plane, mais pas uniquement.

On comprend que lorsque le support est posé sur la surface de pose, la première direction est sensiblement parallèle à normale au plan de pose.

On entend par « direction sensiblement parallèle à la normale au plan de pose », une direction formant un angle compris entre 0 et 45° avec la normale au plan de pose. De manière analogue, par « direction sensiblement perpendiculaire à la normale au plan de pose », on entend une direction formant un angle compris entre 45° et 90° avec la normale au plan de pose.

On comprend ainsi que lorsque le support est disposé sur une surface de pose. L'embase, la portion de support et l'élément réflecteur sont disposés dans cet ordre selon la première direction, l'embase étant disposée du côté de la surface de pose.

On comprend également que la première et la deuxième direction définissent un plan d'appui, la face arrière de la tablette étant en regard du plan d'appui, lorsque la tablette est posée sur le support. Bien entendu, l'élément réflecteur et la portion de support s'étendent du même côté par rapport à la portion d'appui, à savoir du côté de la portion d'appui en regard de la face arrière de la tablette.

Bien entendu, l'élément réflecteur est formé par tout élément configuré pour réfléchir une image vers l'organe optique. Par exemple, l'élément réflecteur est un miroir. On comprend que l'élément réflecteur est configuré pour être incliné par rapport à la portion d'appui et à la surface de pose/plan de pose de façon à réfléchir une image depuis/vers un emplacement de réalisation d'un dessin vers/depuis l'organe optique de la tablette. L'élément réflecteur étant configuré pour être disposé en regard de l'organe optique, on comprend que l'élément réflecteur est en regard du plan d'appui défini par les première et deuxième directions de la portion d'appui de telle sorte à pouvoir être disposé en regard de l'organe optique d'une tablette, lorsqu'une tablette est disposée sur le support.

Bien entendu, en utilisation, la tablette est disposée sur la portion de support. On comprend donc qu'une arrête latérale de la tablette est en appui sur la portion de support tandis que la face arrière de la tablette est en appui sur la portion d'appui. Par exemple, la portion de support comprend un unique élément s'étendant de façon continue selon la deuxième direction sur au moins une portion de la longueur de la portion d'appui selon la deuxième direction. Selon une variante, la portion de support comprend plusieurs éléments, comme par exemple deux plots alignés selon la deuxième direction.

Bien entendu, on dispose la tablette sur le support de telle sorte que l'organe optique soit au plus près de l'organe réflecteur, l'organe optique étant, dans la grande majorité des cas, disposé, au sein de la tablette, en bordure de l'écran. La position de la portion de support est réglable selon la première direction de manière à pouvoir aligner, selon la première direction, l'organe optique de la tablette avec l'élément réflecteur. Par exemple, la portion de support est déplaçable uniquement selon la première direction. Selon une variante, la portion de support est déplaçable dans plusieurs directions, par exemple la première, la deuxième direction et/ou une direction transverse à la première et la deuxième direction.

La position de l'élément réflecteur est réglable selon la deuxième direction, de manière à pouvoir aligner selon la deuxième direction l'élément réflecteur avec l'organe optique de la tablette. Par exemple, l'élément réflecteur est déplaçable uniquement selon la deuxième direction. Selon une variante, l'élément réflecteur est déplaçable dans plusieurs directions, par exemple la première, la deuxième direction et/ou une direction transverse à la première et la deuxième direction.

Grâce à la position ajustable de la portion de support et de l'élément réflecteur, le support est polyvalent et peut s'adapter à différentes tailles et/ou configurations de tablette, de façon à ce que l'organe optique de la tablette soit disposé en regard de l'élément réflecteur. Grâce à ce support, on peut utiliser tout type de tablettes pour une application de réalité augmentée, en particulier pour une assistance à dessin/écriture par réalité augmentée. En outre le dispositif présente une structure simple et donc robuste et à faible coût de fabrication.

Dans certains modes de réalisation, la portion de support comprend une face de support inclinée par rapport à la portion d'appui, l'angle entre la portion d'appui et la face de support est compris entre 20° et 45° (vingt et quarante-cinq degrés d'angle).

On comprend que la face de support est la ou les faces de la portion de support qui coopère(nt) avec une arrête latérale de la tablette. On comprend que la face de support est inclinée par rapport au plan d'appui défini par les première et deuxième directions.

On comprend en outre que la portion de support définit un espace entre la face de support et la portion d'appui, l'espace étant destiné à accueillir une arrête (ou un bord) de la tablette.

En d'autres termes, la face de support et la portion d'appui forment sensiblement un « V » en vue en coupe perpendiculaire à la première et deuxième direction, l'ouverture du « V » étant comprise entre 20° et 45° d'angle (vingt et quarante-cinq degrés d'angle). Ainsi en fonction de l'épaisseur de la tablette, celle-ci sera positionnée plus ou moins « au fond » du « V », ce qui permet de plaquer la face arrière de la tablette sur la portion d'appui et assure une certaine stabilité.

Grâce à ces dispositions, le support est adapté pour recevoir de manière stable des tablettes multimédia de différentes épaisseurs, ce qui renforce sa polyvalence et sa fiabilité pour des applications de réalité augmentée.

Dans certains modes de réalisation, la face de support de la portion de support comprend une portion de friction.

Bien entendu, la portion de friction est disposée sur au moins une portion de la face de support. Par exemple la portion de friction est en élastomère. Selon un autre exemple, la portion de friction résulte d'un traitement de surface d'au moins une portion de la face de support. On comprend que le coefficient de friction de la portion de friction est supérieur au coefficient de friction des autres parties du support avec lesquelles coopère la tablette lorsqu'elle est disposée sur le support. Ainsi, les glissements de la tablette lorsqu'elle est disposée sur le support sont évités, ce qui évite que la tablette tombe du support. En outre, la portion de friction permet d'éviter un basculement de la tablette de telle manière que la face arrière de la tablette s'écarte de la portion d'appui. Grâce à ces dispositions, la stabilité de la tablette au sein du support est renforcée quelle que soit sa taille, ce qui améliore la polyvalence et la fiabilité du support pour des applications de réalité augmentée.

Dans certains modes de réalisation, le coefficient de friction de la portion de friction est compris entre 0,5 et 2, de préférence entre 0,8 et 1,5, plus préférentiellement entre 0,8 et 1.

Bien entendu, le coefficient de friction est un coefficient de friction statique, correspondant à un frottement entre un élastomère et du verre ou entre un élastomère et de l'aluminium. Ceci correspond aux matériaux les plus communément rencontrés pour les tablettes.

Un tel coefficient de friction est particulièrement bien adapté aux matériaux de la majorité des tablettes du marché pour éviter leur glissement, ce qui améliore la polyvalence du support et sa fiabilité pour des applications de réalité augmentée.

Dans certains modes de réalisation, le support présente un plan de pose destinée à venir en appui sur une surface de pose, l'inclinaison de la portion d'appui par rapport à une normale au plan de pose étant inférieure à 20° (vingt degrés d'angle).

Comme indiqué ci-avant, le plan de pose est défini par l'embase, et par d'éventuels autres éléments tels qu'un pied. Grâce à cette inclinaison de la portion d'appui, les distorsions de perspective pour l'utilisateur sont évitées, et ce quel que soit le type de tablette, tout en assurant une stabilité suffisante pour des applications de réalité augmentée, ce qui renforce sa polyvalence et sa fiabilité pour des applications de réalité augmentée.

Dans certains modes de réalisation, l'inclinaison de la portion d'appui est comprise entre 5° et 15° (cinq degrés d'angle et quinze degrés d'angle) et plus préférentiellement l'inclinaison de la portion d'appui est d'environ 10° (dix degrés d'angle). Ceci permet de garantir un équilibre optimal entre la stabilité de la tablette et les distorsions de perspectives, ce qui renforce la polyvalence et la fiabilité de la tablette pour des applications de réalité augmentée.

Dans certains modes de réalisation, l'angle entre l'élément réflecteur optique et la portion d'appui est supérieur ou égal à 53° (cinquante-trois degrés d'angle).

Dans certains modes de réalisation, l'angle entre l'élément réflecteur optique et la portion d'appui est inférieur ou égal à 62° (soixante-deux degrés d'angle).

Grâce à un tel angle, l'élément réflecteur est adapté pour renvoyer vers l'organe optique de la tablette une image de la zone juste devant le support. Par rapport au support, cette zone est particulièrement bien adaptée pour que l'utilisateur puisse dessiner ou écrire sans gêne particulière, tout en se faisant assister par réalité augmentée de manière optimale par la tablette disposée sur le support.

Dans certains modes de réalisation, la projection de la longueur de la portion d'appui selon la première direction sur la normale au plan de pose est supérieure à 260 mm (deux cent soixante millimètres), de préférence, comprise entre 300 mm (trois cents millimètres) et 600 mm (six cents millimètres).

Grâce à une telle longueur, le support est adapté à une gamme importante de tablettes, c'est-à-dire à une gamme de tablettes ayant des tailles diverses, ce qui renforce sa polyvalence et sa fiabilité pour des applications de réalité augmentée.

Dans certains modes de réalisation, le support comprend au moins un élément magnétique configuré pour maintenir la portion de support en position.

Par exemple, l'élément magnétique comprend un ou plusieurs aimants. Grâce à cet élément magnétique, le support comprend des moyens simples pour maintenir et facilement ajuster finement la position de la portion de support selon la première direction, ce qui renforce sa polyvalence et sa fiabilité pour des applications de réalité augmentée. Le glissement de la portion de support sur la portion d'appui est continu et fluide. L'élément magnétique permet ainsi un positionnement précis de la portion de support sur la portion d'appui.

Dans certains modes de réalisation, l'élément réflecteur optique est déplaçable selon une troisième direction normale au plan formé par les première et deuxième directions, un élément de rappel tendant à déplacer l'élément réflecteur optique selon la troisième direction vers la portion d'appui.

Ainsi, grâce à l'élément de rappel, l'élément réflecteur est automatiquement positionné au plus près de l'organe optique de la tablette, et ce quelle que soit la tablette, ce qui renforce la polyvalence et la fiabilité du support pour des applications de réalité augmentée.

### BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 représente le support de tablette ;
- la figure 2 représente une vue en coupe du support selon le plan II de la figure 1 ;
- les figures 3A, 3B et 3C représentent le support, équipé d'une tablette dans deux configurations différentes fonctions de la taille de la tablette ; et
- la figure 4 représente une vue en coupe de la portion de support et la position relative de tablettes de différentes épaisseurs,
- les figures 5A et 5B représentent une première variante de réalisation du châssis de l'élément réflecteur,
- les figures 6A et 6B représentent une deuxième variante de réalisation du châssis de l'élément réflecteur,
- les figures 7A et 7B représentent une troisième variante de réalisation du châssis de l'élément réflecteur,
- les figures 8A et 8B représentent une quatrième variante de réalisation du châssis de l'élément réflecteur,
- les figures 9A et 9B représentent une première variante de réalisation de la portion de support,
- les figures 10A et 10B représentent une deuxième variante de réalisation de la portion de support, et
- les figures 11A et 11B représentent une troisième variante de réalisation de la portion de support.

### DESCRIPTION DÉTAILLÉE DE L'INVENTION

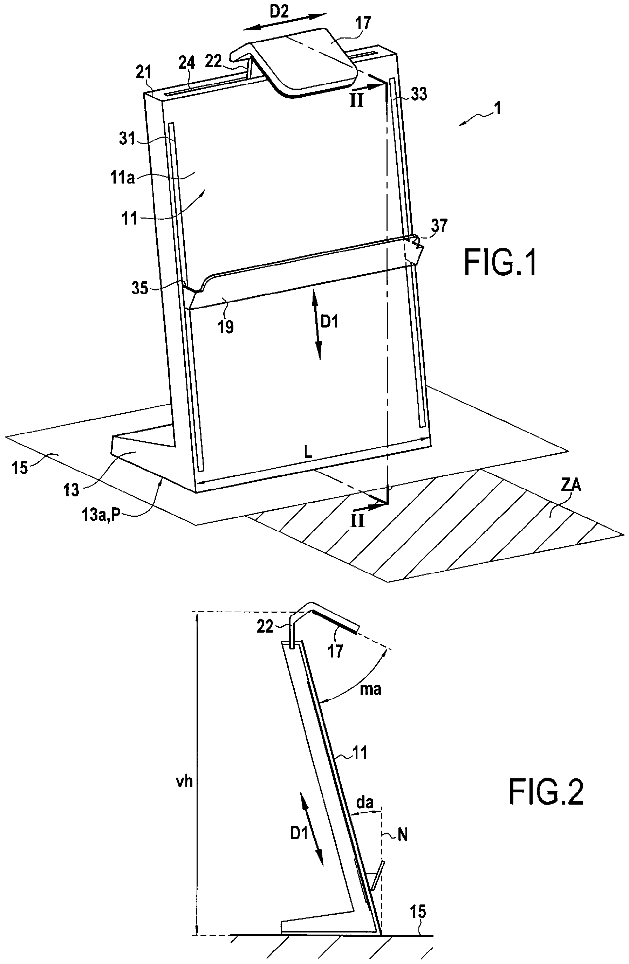

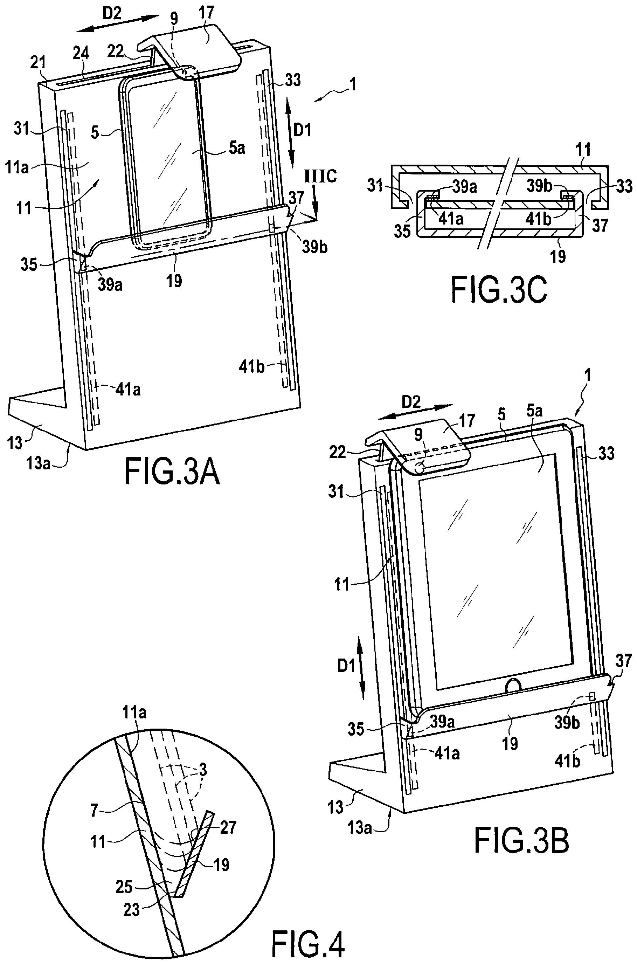

Les figures 1 à 4 représentent un support de tablette multimédia 1. Une tablette multimédia 3, visible en figures 3 et 4. La tablette 3 comprend une face avant 5, présentant un écran 5a, et une face arrière 7 opposée à la face avant 5. La tablette 3 comprend en outre un organe optique 9, dans cet exemple une caméra, adjacent à l'écran sur la face avant 5.

Le support 1 comprend une portion d'appui 11 qui est configurée pour coopérer avec la face arrière 7 de la tablette 3 de façon à ce que l'écran 5a soit visible. Plus particulièrement, dans le mode de réalisation représenté, la portion d'appui 11 comprend un côté avant présentant une face avant 11a, configurée pour coopérer avec la face arrière 7 de la tablette 3, cette face avant 11a définissant ainsi un plan d'appui P.

La portion d'appui 11 s'étend selon une première direction D1 qui, dans ce mode de réalisation et selon une deuxième direction D2 transversale à la première direction D1.

La portion d'appui 11 comprend une embase 13 configurée pour être posée sur une surface de pose 15. L'embase 13 s'étend depuis un côté arrière, opposé au côté avant, de la portion d'appui 11 à l'opposé du côté avant.

L'embase 13 comprend une face de contact 13a définissant un plan de pose P destiné à venir en appui sur la surface de pose 15. L'inclinaison da de la portion d'appui 11 par rapport à une normale N au plan de pose P est inférieure à 20°. Dans ce mode de réalisation, l'embase 13 est venue de matière avec la portion d'appui 11. Selon d'autre mode de réalisation, la portion d'appui 11 peut être montée sur l'embase 13 par tout moyen, par exemple par collage, soudage, etc.

La projection de la portion d'appui sur la normale N au plan de pose P a une longueur vh de 330 mm.

Le support 1 comprend en outre un élément réflecteur 17 configuré pour être disposé en regard de l'organe optique 9 de la tablette 3, comme représenté sur les figures 3A et 3B. L'élément réflecteur 17 est déplaçable selon la deuxième direction D2. La portion d'appui 11 comprend un bord supérieur 21, opposé selon la première direction à l'embase 13. L'élément réflecteur 17 est fixé à la portion d'appui 11 sur le bord supérieur 21. Dans le mode de réalisation représenté, l'élément réflecteur 17 est déplaçable uniquement selon la deuxième direction D2, le long de la portion d'appui 11.

Un angle ma entre l'élément réflecteur 17 et la portion d'appui 11 est égal à 59,5°. Ainsi, le champ de l'organe optique 9 de la tablette 1 est adapté à la zone ZA juste devant le support 1. L'élément réflecteur 17 réfléchit ainsi vers l'organe optique 9 l'image de la zone ZA. Dans ce mode de réalisation, l'élément réflecteur 17 est un miroir.

Le support 1 comprend en outre une portion de support 19, représentée en coupe en figure 4, configurée pour supporter la tablette 3. La coupe de la figure 4 est une coupe transverse au plan défini par la première et la deuxième direction D1 et D2. La portion de support 19 est déplaçable selon la première direction D1. Dans le mode de réalisation représenté, la portion de support 19 est déplaçable uniquement selon la première direction D1. La portion de support 19 s'étend de façon continue sur une portion de la largeur L de la portion d'appui 11.

L'élément réflecteur 17 et la portion de support 19 sont portés par la portion d'appui 11 de sorte que, considéré selon la première direction D1, la portion de support 19 est disposée entre l'embase 13 et l'élément réflecteur 17.

Plus précisément, dans cet exemple, l'élément réflecteur 17 est monté sur un châssis 22 en forme générale sensiblement en « U » (vu en coupe transversale à la première et deuxième direction D1 et D2). Une barre verticale du « U » porte, du côté intérieur du « U », l'élément réflecteur 17 tandis que l'autre barre verticale du « U » forme une languette insérée dans une glissière 24 ménagée dans le bord supérieur 21 de la portion d'appui 11.

La portion de support 19 comprend une face de support 23 inclinée par rapport à la portion d'appui 11, l'angle entre la portion d'appui 11 et la face de support 23 est d'environ 35° (trente-cinq degrés d'angle) dans cet exemple. Ainsi, la portion de support 19 définit un espace 25 entre la face de support 23 et la face avant 11a de la portion d'appui 11, l'espace 25 étant destiné à accueillir un bord de la tablette 3. Comme cela est visible sur la figure 4, vu en coupe transversale perpendiculaire à la première et deuxième direction D1 et D2, la face de support 23 et la face avant 11a forment sensiblement un « V ». La position de la tablette 3 au sein de « V » étant plus ou moins « profonde » en fonction de l'épaisseur de la tablette.

La face de support 23 de la portion de support 19 comprend une portion de friction 27. Dans cet exemple, la portion de friction 27 est en élastomère et présente un coefficient de friction de 1 tandis que le coefficient de friction de la portion d'appui 11 et des autres parties de la portion de support 19 est de 0,2.

Comme représenté en figures 3A, 3B et 3C, la portion d'appui 11 comprend deux guides 31, 33, se présentant sous la forme de lumières oblongues s'étendant dans la première direction D1. Les deux guides 31, 33 sont sensiblement parallèles et espacés selon la deuxième direction D2, la distance séparant les deux guides selon la deuxième direction étant, dans cet exemple, de 80% de la largeur totale L de la portion d'appui 11. La portion de support 19 comprend, deux éléments d'engagement 35, 37 configurés pour s'engager dans les guides 31, 33, selon une direction transversale à la première et la deuxième direction D1 et D2.

Dans ce mode de réalisation, les éléments d'engagement 35, 37 portent du côté arrière de la portion d'appui 11, chacun un aimant 39a, 39b s'étendant selon la deuxième direction D2, chacun des aimants 39a, 39b étant fixés aux éléments d'engagement 35, 37 par tout moyen connu par ailleurs. Sur une face arrière de la portion d'appui 11, opposée à la face avant 11a, la portion d'appui 11 présente deux plaques métalliques 41a, 41b coopérant avec les aimants 39a, 39b respectivement. Les plaques métalliques 41a, 41b sont, par exemple, fixées sur la face arrière de la portion d'appui 11 par collage ou bien est noyées dans la masse de la portion d'appui 11. Selon une variante, portion d'appui 11 est métallique. Les aimants 39a, 39b peuvent ainsi coopérer directement avec la portion d'appui 11 de façon à maintenir la portion de support 19 dans une position choisie, adaptée à la taille de la tablette 3.

Comme représenté sur les figures 3A et 3B, le support 1 est adaptable à différents types de tablettes. Pour positionner la tablette 3, on loge un bord latéral de la tablette 3 dans la portion de support 19 de sorte que l'organe optique 9 de la tablette 3 soit positionné au plus proche de l'élément réflecteur 17 ou au plus proche du bord supérieur 21 de la tablette 3. Ensuite, on fait glisser les éléments d'engagement 35, 37 dans les guides 31, 33 de façon à déplacer la portion de support 19 selon la première direction D1 de façon à ce que l'organe optique 9 de la tablette soit aligné avec l'élément réflecteur 17 selon la première direction D1 (i.e. même position selon la première direction D1). Ensuite, on fait glisser le châssis 22 dans la glissière 24 selon la deuxième direction D2 de façon à positionner l'élément réflecteur 17 en face de l'organe optique 9 de la tablette. En d'autres termes, on aligne ensuite l'élément réflecteur 17 avec l'organe optique 9 selon la deuxième direction D2 (i.e. même position selon la deuxième direction D2). Comme représenté en figures 3A et 3B, les positions de la portion de support 19 et de l'élément réflecteur 17 sont ajustées respectivement selon la première direction D1 et selon la deuxième direction D2 en fonction de la taille de la tablette 3 et de la position de l'organe optique 9 au sein de la tablette 3.

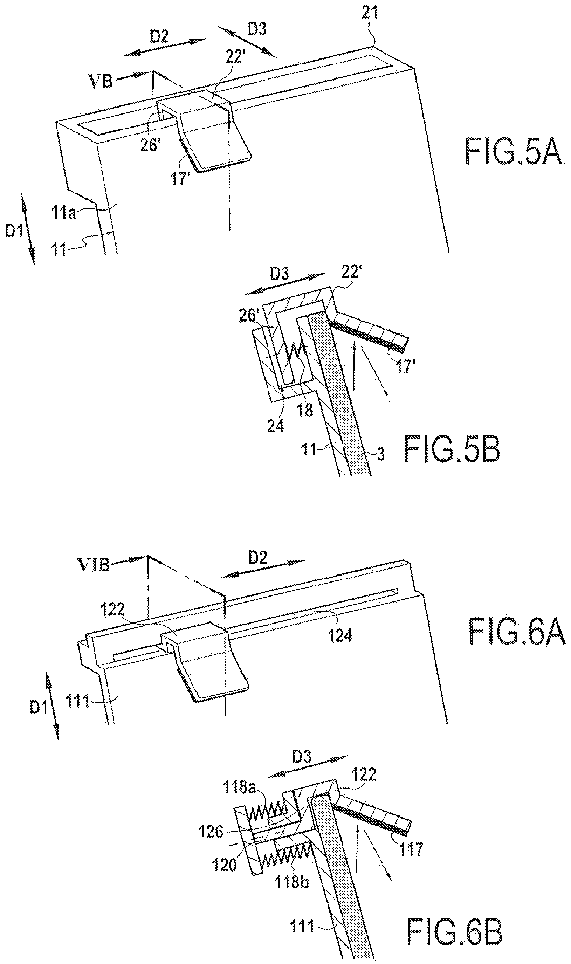

Selon une première variante 22' du châssis 22 représentée sur les figures 5A et 5B, l'élément réflecteur 17' est également déplaçable selon une troisième direction D3, normale au plan formé par les première et deuxième directions D1 et D2. Un ressort 18 est disposé dans la glissière 24 entre la portion d'appui 11 et la languette 26', du côté intérieur du « U ». Le ressort 18 rappelle donc l'élément réflecteur 17 vers la portion d'appui 11 selon la troisième direction D3. La barre latérale du « U » portant l'élément réflecteur 17 est ainsi configurée pour venir en appui contre la tablette, lorsqu'une tablette est disposée sur le support 1.

Les figures 6A et 6B représentent une deuxième variante du châssis 122 portant l'élément réflecteur 117. Le châssis 122 comprend une partie de maintien 120 disposée dans le prolongement de l'extrémité de la languette 126. La partie de maintien 120 s'étend selon la troisième direction D3. La partie de maintien 120 présente une forme sensiblement de « T ». Des ressorts 118a, 118b sont disposés entre la barre horizontale du «T », de part et d'autre de la barre verticale du « T », et la portion d'appui 111. Les ressorts 118a, 118b permettent de rappeler l'élément réflecteur 117 vers la portion d'appui 111, l'élément réflecteur 117 étant ainsi configurée pour venir en appui contre la tablette, lorsqu'une tablette est disposée sur le support.

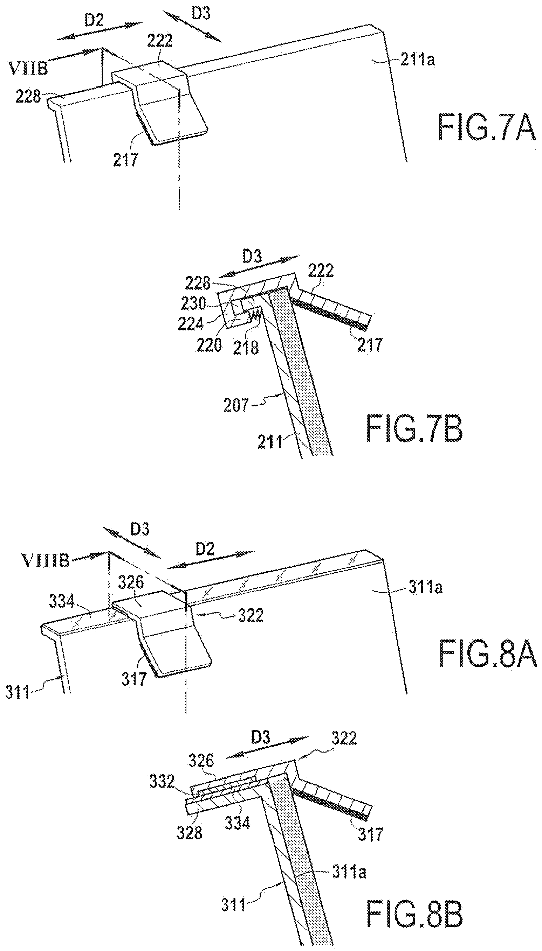

Les figures 7A et 7B représentent une troisième variante du châssis 222 portant l'élément réflecteur 217. Selon cette deuxième variante, la portion d'appui 211 comprend une saillie 228, s'étendant selon la troisième direction D3 à l'opposé de la face avant 211a. Le châssis 222 comprend une partie de maintien 220 s'étendant depuis la languette 224. selon la troisième direction D3, la languette 224 s'étendant selon la première direction D1. Ainsi, le châssis 222 forme une rainure 230 dans laquelle est insérée la saillie 228 de la portion d'appui 211. Un ressort 218 est disposé entre la partie de maintien 220 et la portion d'appui 211, rappelant l'élément réflecteur 217 vers la portion d'appui 211.

Les figures 8A et 8B représentent une quatrième variante du châssis 322 portant l'élément réflecteur 317. La portion d'appui 311 comprend une saillie 328, s'étendant selon la troisième direction D3 à l'opposé de la face avant 311a. Le châssis 322 présente une languette 326 portant un aimant et coopérant avec une plaque métallique 334 disposée sur la saillie 328 de la portion d'appui 311. Grâce à cette liaison par aimant, on peut déplacer l'élément réflecteur 317 selon la troisième direction D3 pour venir en appui contre une tablette, lorsqu'une tablette est disposée sur le support.

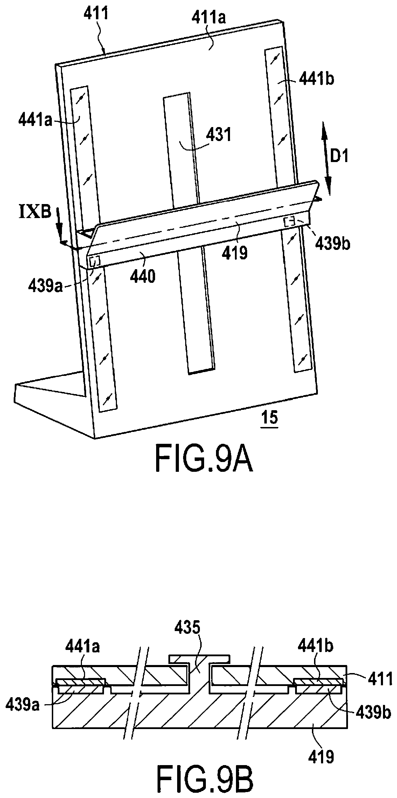

Les figures 9A et 9B représentent une première variante de la portion de support 419. Dans cette première variante, la portion d'appui 411 comprend un seul guide 431, qui s'étend selon la première direction D1 et disposé sensiblement au centre de la portion d'appui 411 selon la deuxième direction D2. La portion de support 419 comprend donc un seul élément d'engagement 435 de section transverse sensiblement en forme de «T ». La portion de support 419 comprend en outre une portion de coopération 440, comprenant deux aimants 439a, 439b disposés de part et d'autre de la portion d'appui 411 selon la deuxième direction D2. La portion de coopération 440 est disposée dans le prolongement de la pointe du « V » formant la portion de support 419, selon la première direction D1. En d'autres termes, la portion de coopération 440 est disposée sous la partie en forme de « V » formant support pour la tablette 3 lorsque le support 1 est posé sur la surface de pose 15. Les aimants 439a, 439b, coopèrent avec deux plaques métalliques 441a, 441b, disposées sur la face avant 411a de la portion d'appui 411. Alternativement, la portion d'appui 411 est réalisée entièrement en métal.

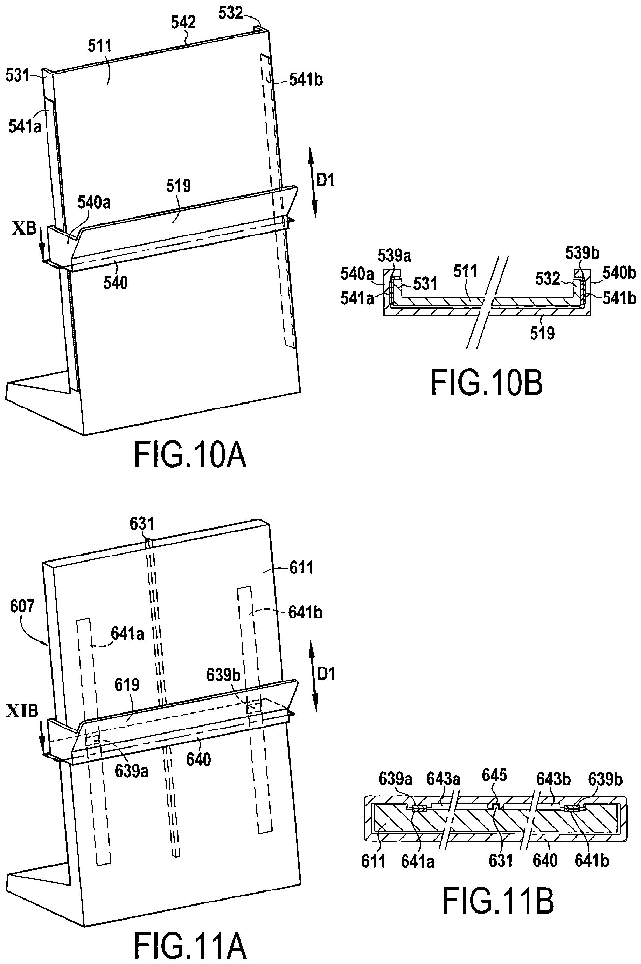

Les figures 10A et 10B représentent une deuxième variante de la portion de support. La portion d'appui 511 a une section transverse à la première direction D1 sensiblement en forme de « U ». Les éléments latéraux 531, 532 de la portion d'appui 511, c'est à dire les deux barres latérales du « U », constituent les guides. La portion de support 519 comprend des portions de coopération 540a, 540b, disposées de part et d'autre de la partie en forme de « V » formant support de la tablette selon la deuxième direction D2. Chacune des portions de coopération 540a, 540b présente une section transverse de forme sensiblement en « L », l'une des barres du « L » s'étendant selon la troisième direction D3 et étant adjacente à l'un des éléments latéraux 531, 532 de la portion d'appui 511. L'autre barre du « L » s'étend selon la deuxième direction D2, et coopère avec une surface formant l'extrémité de l'un des éléments latéraux 531, 532 de la portion d'appui 511. Chacune des parties de portions de coopération 540a, 540b s'étendant selon la troisième direction D3 comprend un aimant 539a, 539b. Des plaques métalliques 541a, 541b sont prévues dans chacun des éléments latéraux 531, 532 de la portion d'appui 511. Alternativement, la portion d'appui 511 est réalisée entièrement en métal.

Les figures 11A et 11B représentent une troisième variante de la portion de support 619. La portion de support 619 comprend une portion de coopération 640 s'étendant autour de la portion d'appui 611. La face arrière 607 de la portion d'appui 611 comprend deux gorges 643a, 643b s'étendant selon la première direction D1. La portion de coopération 640 comprend des aimants 639a, 639b coopérant avec les bords des deux gorges 643a, 643b. Les deux gorges 643a, 643b sont séparées par une nervure de guidage 631 coopérant avec une rainure de guidage 645 de la portion de coopération 640. Les gorges 643a, 643b comprennent chacune une plaque métallique 641a, 641b coopérant avec les aimants 639a, 639b. Alternativement, la portion d'appui 611 est réalisée entièrement en métal.

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des variantes additionnelles. En particulier, les variantes représentées en figures 1 à 3, 6a et 6b, 7a et 7b, 8a et 8b, 10aa et 10b, 11a et 11b, 12a et 12b sont combinables. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Support (1) de tablette (3) multimédia la tablette (3) comprenant une face avant (5) présentant un écran (5a) et un organe optique (9), et une face arrière (7) opposée à la face avant (5), le support (1) comprenant une portion d'appui (11) configurée pour coopérer avec la face arrière (7) de la tablette (3) de façon à ce que l'écran (5a) soit visible, la portion d'appui (11) s'étendant selon une première direction (D1) et selon une deuxième direction (D2) transversale à la première direction (D1), la portion d'appui (11) comprenant une embase (13) configurée pour être posée sur une surface de pose (15), un élément réflecteur optique (17) configuré pour être disposé en regard de l'organe optique (9), et une portion de support (19) configurée pour supporter la tablette (3), l'élément réflecteur optique (17) et la portion de support (19) étant portés par la portion d'appui (11) de sorte que, considéré selon la première direction (D1), la portion de support (19) est disposée entre l'embase (13) et l'élément réflecteur optique (17), **caractérisé en ce que** la portion de support (19) est déplaçable selon la première direction (D1), tandis que l'élément réflecteur optique (17) est déplaçable selon la deuxième direction (D2).

2. Support selon la revendication 1, dans lequel la portion de support (19) comprend une face de support (23) inclinée par rapport à la portion d'appui (11), l'angle entre la portion d'appui (11) et la face de support (23) est compris entre 20° et 45°.

3. Support selon la revendication 2, dans lequel la face de support (23) de la portion de support (19) comprend une portion de friction (27).

4. Support selon la revendication 3, dans lequel le coefficient de friction de la portion de friction (27) est compris entre 0,5 et 2.

5. Support selon l'une quelconque des revendications précédentes, dans lequel le support (1) présente un plan de pose (P) destinée à venir en appui sur une surface de pose (15), l'inclinaison de la portion d'appui (11) par rapport à une normale au plan de pose (15) étant inférieure à 20°.

6. Support selon l'une quelconque des revendications précédentes, dans lequel l'angle entre l'élément réflecteur optique (17) et la portion d'appui (11) est supérieur ou égal à 53°.

7. Support selon l'une quelconque des revendications précédentes, dans lequel l'angle entre l'élément réflecteur optique (17) et la portion d'appui (11) est inférieur ou égal à 62°.

8. Support selon l'une quelconque des revendications précédentes, dans lequel la projection de la longueur de la portion d'appui (11) selon la première direction (D1) sur la normale au plan de pose (P) est supérieure à 260 mm, de préférence, comprise entre 300 mm et 600 mm.

9. Support selon l'une quelconque des revendications précédentes, comprenant au moins un élément magnétique configuré pour maintenir la portion de support (19) en position.

10. Support selon l'une quelconque des revendications précédentes, dans lequel, l'élément réflecteur optique (17) est déplaçable selon une troisième direction (D3) normale au plan formé par les première et deuxième directions (D2), un élément de rappel (18) tendant à déplacer l'élément réflecteur optique (17) selon la troisième direction (D3) vers la portion d'appui (11).

## Patentansprüche

1. Halterung (1) für ein Multimedia-Tablet (3), das Tablett (3) umfassend eine Vorderseite (5), die einen Bildschirm (5a) und ein optisches Element (9) aufweist, und eine Rückseite (7) gegenüber der Vorderseite (5), die Halterung (1) umfassend einen Anlegeabschnitt (11), der derart ausgebildet ist, dass er mit der Rückseite (7) des Tablets (3) so zusammenzuwirken, dass der Bildschirm (5a) sichtbar ist, wobei sich der Anlegeabschnitt (11) entlang einer ersten Richtung (D1) und entlang einer zu der ersten Richtung (D1) quer verlaufenden zweiten Richtung (D2) erstreckt, der Anlegeabschnitt (11) umfassend eine Basis (13), die zum Aufstellen auf eine Aufstellfläche (15) ausgebildet ist, ein optisches Reflektorelement (17), das zum Anordnen gegenüber dem optischen Element (9) ausgebildet ist, und einen Trägerabschnitt (19), der zum Tragen des Tablets (3) ausgebildet ist, wobei das optische Reflektorelement (17) und der Trägerabschnitt (19) von dem Anlegeabschnitt (11) getragen werden, sodass der Trägerabschnitt (19) in der ersten Richtung (D1) gesehen zwischen der Basis (13) und dem optischen Reflektorelement (17) angeordnet ist, **dadurch gekennzeichnet, dass** der Trägerabschnitt (19) entlang der ersten Richtung (D1) verstellbar ist, während das optische Reflektorelement (17) entlang der zweiten Richtung (D2) verstellbar ist.

2. Halterung nach Anspruch 1, wobei der Trägerabschnitt (19) eine Stützseite (23) umfasst, die gegenüber dem Anlegeabschnitt (11) geneigt ist, wobei der Winkel zwischen dem Anlegeabschnitt (11) und der Stützseite (23) zwischen 20° und 45° beträgt.

3. Halterung nach Anspruch 2, wobei die Stützseite (23) des Trägerabschnitts (19) einen Reibungsabschnitt (27) umfasst.

4. Halterung nach Anspruch 3, wobei der Reibungskoeffizient des Reibungsabschnitts (27) zwischen 0,5 und 2 beträgt.

5. Halterung nach einem der vorherigen Ansprüche, wobei die Halterung (1) eine Aufstellebene (P) aufweist, die dazu bestimmt ist, an einer Aufstellfläche (15) anzuliegen, wobei die Neigung des Anlegeabschnitts (11) gegenüber einer Senkrechten der Aufstellebene (15) kleiner als 20° ist.

6. Halterung nach einem der vorherigen Ansprüche, wobei der Winkel zwischen dem optischen Reflektorelement (17) und dem Anlegeabschnitt (11) größer als oder gleich 53° ist.

7. Halterung nach einem der vorherigen Ansprüche, wobei der Winkel zwischen dem optischen Reflektorelement (17) und dem Anlegeabschnitt (11) kleiner als oder gleich 62° ist.

8. Halterung nach einem der vorherigen Ansprüche, wobei die Projektion der Länge des Anlegeabschnitts (11) entlang der ersten Richtung (D1) auf die Senkrechte der Aufstellebene (P) größer ist als 260 mm, vorzugsweise zwischen 300 mm und 600 mm.

9. Halterung nach einem der vorherigen Ansprüche, umfassend mindestens ein magnetisches Element, das ausgebildet ist, den Trägerabschnitt (19) in Position zu halten.

10. Halterung nach einem der vorherigen Ansprüche, wobei das optische Reflektorelement (17) entlang einer zu der durch die erste und die zweite Richtung (D2) gebildeten Ebene senkrechten dritten Richtung (D3) verstellbar ist, wobei ein Rückstellelement (18) dazu neigt, das optische Reflektorelement (17) entlang der dritten Richtung (D3) zu dem Anlegeabschnitt (11) zu verstellen.

## Claims

1. Support (1) for a multimedia tablet (3), the tablet (3) comprising a front face (5) having a screen (5a) and an optical member (9), and a rear face (7) opposite the front face (5), the support (1) comprising a bearing portion (11) designed to cooperate with the rear face (7) of the tablet (3) so that the screen (5a) is visible, the bearing portion (11) extending in a first direction (D1) and in a second direction (D2) transverse to the first direction (D1), the bearing portion (11) comprising a base (13) designed to be placed on a placement surface (15), an optical reflector element (17) designed to be arranged opposite the optical member (9), and a support portion (19) designed to support the tablet (3), the optical reflector element (17) and the support portion (19) being carried by the bearing portion (11) so that, when viewed in the first direction (D1), the support portion (19) is arranged between the base (13) and the optical reflector element (17), **characterized in that** the support portion (19) is movable in the first direction (D1), while the optical reflector element (17) is movable in the second direction (D2).

2. Support according to claim 1, wherein the support portion (19) comprises a support face (23) which is inclined with respect to the bearing portion (11), and the angle between the bearing portion (11) and the support face (23) is between 20° and 45°.

3. Support according to claim 2, wherein the support face (23) of the support portion (19) comprises a friction portion (27).

4. Support according to claim 3, wherein the coefficient of friction of the friction portion (27) is between 0.5 and 2.

5. Support according to any of the preceding claims, wherein the support (1) has a placement plane (P) which is intended to abut a placement surface (15), the inclination of the bearing portion (11) with respect to a normal to the placement plane (15) being less than 20°.

6. Support according to any of the preceding claims, wherein the angle between the optical reflector element (17) and the bearing portion (11) is greater than or equal to 53°.

7. Support according to any of the preceding claims, wherein the angle between the optical reflector element (17) and the bearing portion (11) is less than or equal to 62°.

8. Support according to any of the preceding claims, wherein the projection of the length of the bearing portion (11) in the first direction (D1) on the normal to the placement plane (P) is greater than 260 mm, preferably between 300 mm and 600 mm.

9. Support according to any of the preceding claims, comprising at least one magnetic element designed to hold the support portion (19) in position.

10. Support according to any of the preceding claims, wherein the optical reflector element (17) is movable in a third direction (D3) normal to the plane formed by the first and second directions (D2), a return element (18) tending to move the optical reflector element (17) in the third direction (D3) toward the bearing portion (11).
